# EUROPÄISCHE PATENTSCHRIFT

(11) **EP 1 224 441 B1**
(45) Veröffentlichungstag und Bekanntmachung des Hinweises auf die Patenterteilung: **04.01.2006**
(21) Anmeldenummer: 00960606.2
(22) Anmeldetag: 05.09.2000
(51) Int. Cl.: G01G 19/44

(54) **BETTWAAGE**
BED SCALE
BALANCE POUR LIT

(30) Priorität: 26.10.1999 DE 19952729
(43) Veröffentlichungstag der Anmeldung: 24.07.2002
(73) Patentinhaber: seca ag, 4153 Reinach BL 1 (CH)
(72) Erfinder: WINTERBERG, Matthias, 22115 Hamburg (DE); SIEVERS, Claus-Dieter, 22767 Hamburg (DE)
(74) Vertreter: UEXKÜLL & STOLBERG
(86) Internationale Anmeldenummer: PCT/EP2000/008665
(87) Internationale Veröffentlichungsnummer: WO 2001/031302

(56) Entgegenhaltungen:
- DE-A- 2 017 250
- DE-U- 7 225 247
- US-A- 4 033 420

## Beschreibung

Die Erfindung betrifft eine Bettwaage für den medizinischen Bereich, mit der Betten gewogen werden können.

Derartige Bettwaagen weisen in der Regel vier Meßfüße auf, von denen jeder ein Bein des Bettes, insbesondere zum Beispiel eine Bettenrolle eines verfahrbaren Bettes, tragen kann und mit einem Kraftaufnehmer versehen ist. Der Kraftaufnehmer, beispielsweise eine Wägezelle, liefert ein Signal, das die auf den Meßfuß einwirkende Gewichtskraft repräsentiert. Die Meßfüße haben Übertragungseinrichtungen zur Signalübertragung an eine Auswerteeinrichtung, die deren Signale aufnimmt und auswertet. In vielen Fällen ist die Auswerteeinrichtung als Anzeige- und Bedieneinrichtung ausgebildet, die die Signale der Meßfüße aufnimmt und dazu vorbereitet ist, eine Anzeige zu liefern, die von dem auf den Meßfüßen aufliegenden Gesamtgewicht abhängt. Die Anzeige- und Bedieneinrichtung kann zum Beispiel so vorbereitet sein, daß das Gewicht des Bettes wegtariert werden kann und dann nur das Gewicht des Patienten angezeigt wird.

Eine derartige Bettwaage ist zum Beispiel aus DE 72 25 247 U1 bekannt. Die Bettwaage hat vier Meßfüße mit jeweils einer an die Außenform einer Bettenrolle angepaßten Aufnahme. Zur Anbringung und Benutzung der Bettwaage wird das Bett angehoben und jeweils ein Meßfuß unter jede Bettenrolle gesetzt und dann das Bett auf die Meßfüße abgesetzt. Das Bett muß zu diesem Zweck entweder insgesamt angehoben werden, was eine aufwendige Hebeeinrichtung voraussetzt, oder muß zunächst an einem Ende angehoben werden und die Meßfüße unter die Bettenrollen an diesem Ende gesetzt werden und anschließend an dem gegenüberliegenden Ende angehoben und die Meßfüße unter die verbleibenden Bettenrollen gesetzt werden. Bei beiden Alternativen ist das Aufsetzen des Bettes auf die Meßfüße der Bettwaage für das Personal sehr mühsam und zeitaufwendig. Die gleichen Schwierigkeiten ergeben sich für Betten ohne Bettenrollen, die ebenfalls angehoben werden müssen, um auf die Meßfüße gestellt zu werden.

Bei anderen Bettwaagen sind die Meßfüße jeweils mit einer Rampe versehen, auf die die Bettenrollen geschoben werden können. Zunächst wird das Bett so verschoben, daß alle vier Bettenrollen in eine für das Aufschieben geeignete, gerade Stellung geschwenkt sind. Dann müssen die Rampen der Meßfüße an den Bettenrollen positioniert und anschließend das Bett über die Rampen gleichzeitig auf die vier Meßfüße geschoben werden. Zum Aufschieben des Bettes auf die Meßfüße kann ein erheblicher Kraftaufwand erforderlich sein. Ferner können die Meßfüße beim Aufschieben wegrutschen oder eine der Bettenrollen verschwenken, was die Wiederholung des gesamten Vorgangs erforderlich macht.

Die bekannten Bettwaagen haben daher den Nachteil, daß das Aufsetzen der Beine des Bettes auf die Meßfüße mit erheblichen Schwierigkeiten verbunden ist. Ferner ist es bei den möglichen Schwierigkeiten, die beim Aufsetzen auf die Meßfüße auftreten können, in der Regel nicht möglich, daß sich ein Patient im Bett befindet. Weiterhin können bei nicht ganz exakter Positionierung der Meßfüße, wenn diese nicht ganz exakt den Positionen der vier Beine oder der Bettenrollen an den Beinen entsprechen, Querkräfte auf die Meßfüße auftreten, wenn das Bett auf die Meßfüße aufgesetzt ist. Solche Querkräfte können die Messung der Kraftaufnehmer beeinflussen und damit das von der Bettwaage gelieferte Ergebnis verfälschen.

Es ist Aufgabe der vorliegenden Erfindung, eine einfach handhabbare, präzise messende Bettwaage bereitzustellen.

Zur Lösung dieser Aufgabe dienen die kennzeichnenden Merkmale des Patentanspruchs 1 in Verbindung mit dessen Oberbegriff. Vorteilhafte Ausführungsformen der Erfindung sind in den Unteransprüchen angegeben.

Gemäß der vorliegenden Erfindung weist jeder Meßfuß eine Gestaltung nach Art eines Winkelhebels auf, der auf Schiebeelementen, vorzugsweise Rollen, am Boden verschiebbar ist. Am kürzeren Hebelarm ist schwenkbar eine Schwinge angebracht, die seitlich auf ein am Boden stehendes Bein des Bettes zu dessen Aufnahme aufschiebbar ist. Die Schwinge kann zum Beispiel so ausgebildet sein, daß sie seitlich auf eine am Boden stehende Bettenrolle des Beins zu deren Aufnahme aufschiebbar ist. Zum Aufschieben der Schwinge auf das Bein wird die Winkelhebelanordnung dabei auf ihren Schiebeelementen auf das Bein zu vorgeschoben, bis die Schwinge an Teilen des Beins formschlüssig, um dieses anzuheben, angreift. Zum Beispiel kann die Schwinge so ausgebildet sein, daß sie auf eine am Boden stehende Bettenrolle am unteren Ende des Beins aufschiebbar ist und im aufgeschobenen Zustand Teile der unteren Hemisphäre der Bettenrolle umfaßt, so daß diese durch die Schwinge angehoben werden kann. Die Aufhängung der Schwinge an dem kürzeren Hebelarm und der längere Betätigungshebel der Winkelhebelanordnung und deren Schiebeelemente sind so angeordnet, daß bei Niederdrücken des Betätigungshebels die Schwinge durch den kürzeren Hebelarm angehoben und ihre Aufhängung bis über den Totpunkt, 7 in dem die Aufhängung der Schwinge vertikal über den Schiebeelementen der Winkelhebelanordnung liegt, hinausbewegt wird. Auf diese Weise kommt die Winkelhebelanordnung mit angehobener Schwinge in eine stabile Lage jenseits des Totpunkts, in der das Bein des Betts allein von der Schwinge getragen wird. In der stabilen Endlage ist die Winkelhebelanordnung mit wenigstens einem weiteren Punkt neben den Rollen in Anlage am Boden, so daß eine sichere Lage des Meßfußes erreicht ist. In jedem Meßfuß ist ein Kraftaufnehmer, zum Beispiel eine Wägezelle, vorgesehen, der ein Signal liefert, aus dem ein Maß für die auf die Schwinge wirkende Gewichtskraft bestimmbar ist. Die Signale der Kraftaufnehmer werden über Übertragungungseinrichtungen entweder mit Kabeln oder drahtlos zu der Auswerteeinrichtung übertragen.

Da der Betätigungshebel deutlich länger als der kürzere Hebelarm ausgebildet werden kann, ist die Betätigung der Winkelhebelanordnung zum Anheben der Bettenrollen für das Personal mit geringem Kraftaufwand möglich.

Ferner kann es zu keiner Fehlpositionierung der Beine auf den Meßfüßen kommen, da die Schwinge in einfacher Weise auf ein am Boden stehendes Bein des Bettes aufschiebbar ist, um diese zum Anheben zu fassen. Dadurch, daß beim Anhebevorgang die Schiebeelemente des Meßfußes sich unter das Bein des Bettes bewegen, kann es nicht zum Aufbau von Querkräften kommen, da die Meßfüße beim Anhebevorgang in Querrichtung beweglich sind.

Grundsätzlich kann die Bettwaage für alle Arten von Betten, auch für einfache, mit ihren Beinen auf dem Boden stehende Betten ohne Bettenrollen verwendet werden. Viele Betten im medizinischen Bereich sind mit Bettrollen an ihren Beinen versehen, damit sie verfahrbar sind. Für diese Betten ist es bevorzugt, daß die Meßfüße so ausgebildet sind, daß sie die Bettenrollen aufnehmen können. Mit der vorliegenden Bettwaage ist es nicht notwendig, daß alle Bettenrollen zunächst in eine einheitliche Richtung ausgerichtet werden da die Meßfüße auch auf schräg- oder querstehende Bettenrollen aufgeschoben werden können.

Mit der erfindungsgemäßen Bettwaage ist das Aufsetzen des Bettes auf die Meßfüße erheblich vereinfacht und bedarf auch keiner weiteren Hebevorrichtungen. Dadurch ist die Handhabbarkeit und die Bedienungsfreundlichkeit der Bettwaage erheblich verbessert.

Die Meßfüße können an den vier Bettenrollen nacheinander angesetzt und angehoben werden. Die Betätigungskraft für jeden Hebelvorgang ist aufgrund der Länge des Betätigungshebels gering. Die Installation der Bettwaage kann daher durch jede Pflegekraft erfolgen. Ferner braucht das Bett beim Anheben nur geringfügig angehoben zu werden, so daß die Schwinge gerade vom Boden freikommt; bei einer so geringfügigen Anhebung kann sich während des Anhebens auch ein Patient im Bett befinden. Ferner ist mit der erfindungsgemäßen Bettwaage kein Verfahren des Bettes notwendig. Außerdem müssen die Bettenrollen nicht vorab in eine einheitliche Richtung eingestellt werden, da jeder Meßfuß auch auf eine schräg stehende Bettenrolle aufgeschoben und diese dann angehoben werden kann.

Die Erfindung wird im folgenden anhand eines Ausführungsbeispiels in den Zeichnungen beschrieben, in denen:
- Figur 1: eine schematische Perspektivdarstellung eines Meßfußes für eine Bettwaage der vorliegenden Erfindung zeigt;
- Figuren 2-4: aufeinanderfolgende Stellungen des unteren Teils der Winkelhebelanordnung eines Meßfußes beim Anheben eines Bettes in seitlicher Draufsicht zeigt;
- Figur 5: eine schematische Perspektivdarstellung des Meßfußes aus Figur 1 in der angehobenen Stellung und mit eingeklapptem Betätigungshebel zeigt.

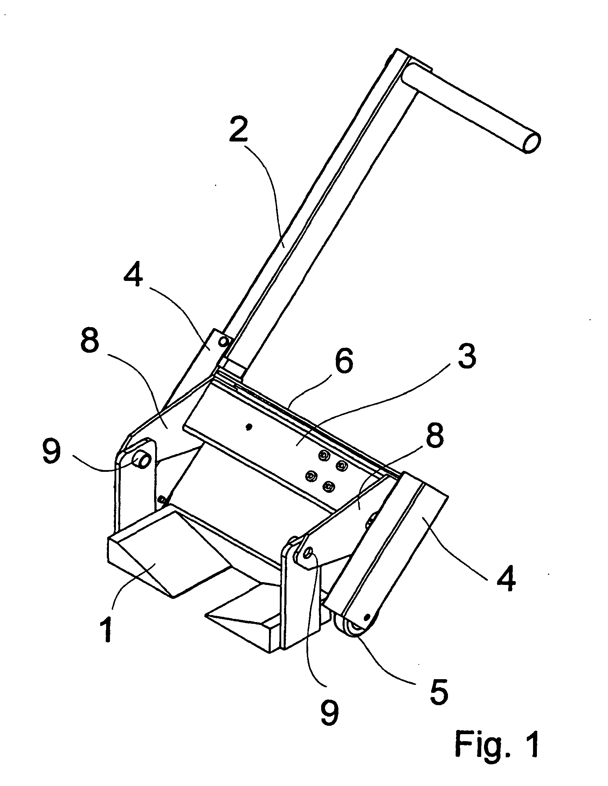

Figur 1 zeigt eine schematische Darstellung eines Meßfußes. Der Meßfuß weist eine Winkelhebelanordnung auf, die kürzere Hebelarme 8 und einen Betätigungshebel 2 hat, der über Rahmenteile 4 verlängert ist, die an ihren unteren Enden Rollen 5 tragen. An den kürzeren Hebelarmen 8 ist an ihren von dem Betätigungshebel 2 entfernten Enden eine Aufhängung 9 für eine Schwinge 1 vorgesehen. Die Schwinge 1 weist zwei keilförmige Träger auf, die einander gegenüberliegend und auf Abstand zueinander angeordnet sind, so daß die keilförmigen Träger unter untere Umfangsbereiche einer am Boden stehenden Bettenrolle schiebbar sind, um diese aufzunehmen. Die keilförmigen Träger der Schwinge 1 sind über eine gemeinsame Rückenwand miteinander verbunden. Alternativ zu den keilförmigen Trägern können auch Dorne oder Walzen als Träger verwendet werden. Die Schwinge 1 ist in der Aufhängung 9 an den kürzeren Hebelarmen 8 schwenkbar.

Die Anordnung der Aufhängung 9 der Schwinge 1 an den kürzeren Hebelarmen 8 und die Positionen der Rollen 5 der Winkelhebelanordnung sind so ausgestaltet, daß sich beim Schwenken des Betätigungshebels 2 aus einer aufrechten oder schrägen Ausgangsstellung zum Boden die Aufhängung der Schwinge 1 an den kürzeren Hebelarmen 8 über den Totpunkt hinwegbewegt, in dem die Aufhängung 9 der Schwinge vertikal über den Rollen 5 der Winkelhebelanordnung liegt.

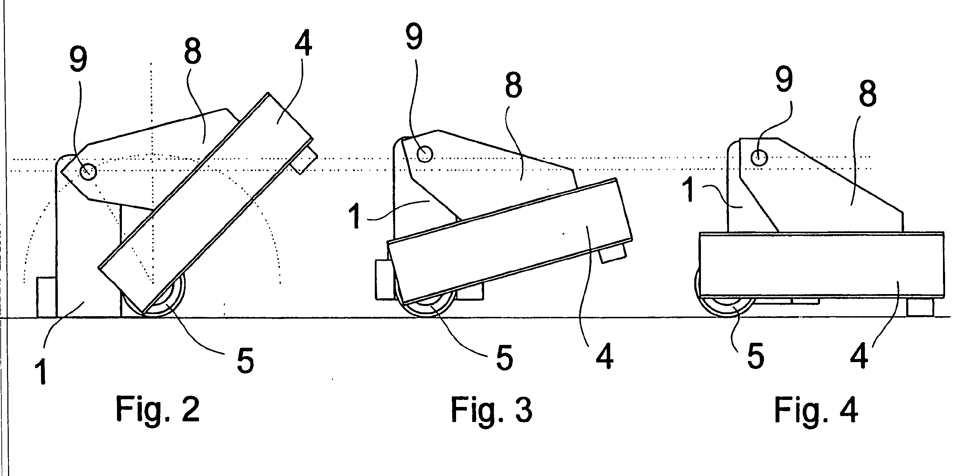

Diese Schwenkbewegung zum Anheben der Schwinge 1 ist schematisch in den Figuren 2 bis 4 in aufeinanderfolgenden Stellungen gezeigt. In Figur 2 ist die Schwinge 1 seitlich auf eine Bettenrolle (nicht gezeigt) aufgeschoben, so daß sie diese in ihren unteren Umfangsbereichen teilweise umfaßt. Daran anschließend wird der Betätigungshebel 2 (in den Figuren 2 bis 4 nicht dargestellt) in Richtung auf den Boden geschwenkt, so daß das Rahmenteil 4 entsprechend geschwenkt wird, wodurch sich die Rahmenteile 4 auf den Rollen 5 vorschieben und schließlich, in der in Figur 3 dargestellten Stellung, in eine Position kommen, in der sie vertikal genau unter der Aufhängung 9 der Schwinge 1 an den kürzeren Hebelarmen 8 liegen. In dieser Stellung verursacht die auf die Schwinge einwirkende Gewichtskraft kein Drehmoment mehr auf den Betätigungshebel. Wird der Betätigungshebel über diesen Totpunkt hinaus geschwenkt, so kommt der Meßfuß in die in Figur 4 dargestellte stabile Endstellung, in der er einerseits auf den Rollen 5 und andererseits auf einem weiteren Auflagepunkt stabil am Boden aufliegt. Die Stabilität der Lage hängt davon ab, wie weit die Aufhängung 9 der Schwinge 1 über den Totpunkt hinaus bewegt ist, wenn der zweite Auflagepunkt in Anlage an den Boden kommt. Die Anordnung sollte so gestaltet sein, daß der Totpunkt um einen hinreichenden Winkelbereich überschritten ist, damit der Betätigungshebel 2 nicht bei unachtsamer Berührung versehentlich angehoben werden und dadurch eine Bewegung zurück in die Ausgangstellung mit der Bettenrolle am Boden ausgelöst werden kann.

Der in Figur 1 dargestellte Meßfuß hat zwei Rahmenteile 4, die an ihren unteren Enden mit Rollen 5 versehen sind. An ihrem oberen Ende sind die Rahmenteile 4 durch eine Rahmentraverse 6 verbunden, auf die die Wägezelle (nicht gezeigt) aufgeschraubt ist. Auf die Wägezelle wiederum ist ein Brückenteil 3 aufgeschraubt, wobei an jedem Ende des Brückenteils 3 einer der kürzeren Hebelarme 8 angesetzt ist.

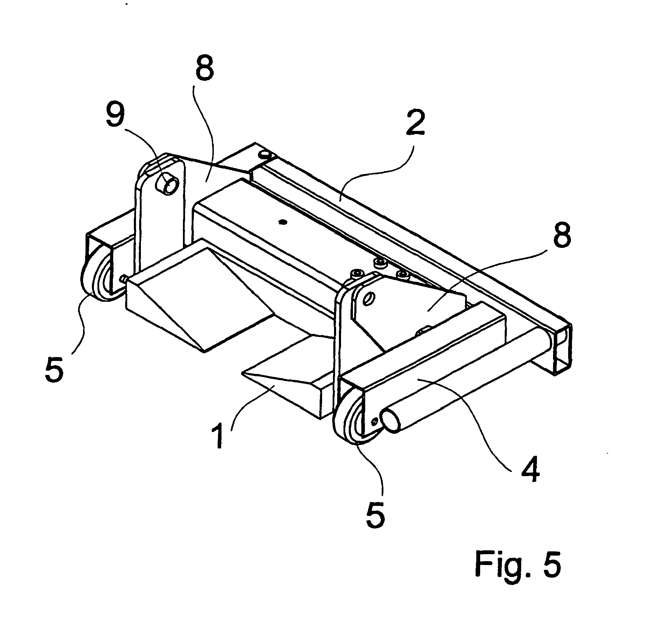

Eines der Rahmenteile 4 ist mit einem Betätigungshebel 2 versehen, der praktisch eine Verlängerung des Rahmenteils darstellt. Der Betätigungshebel 2 ist schwenkbar in einer Ebene senkrecht zu seiner eigentlichen Betätigungsrichtung an dem Rahmenteil 4 angebracht, so daß er nach Anheben des Meßfußes eingeklappt werden kann, wie in Figur 5 dargestellt, damit der vorstehende Betätigungshebel 2 keine Gefährdung für das Personal bildet.

In dem Meßfuß ist ferner die Wägezelle vorgesehen, die ein Signal aufnimmt, das die auf die Schwinge 1 wirkende Gewichtskraft repräsentiert. Die Wägezelle kann zum Beispiel zwischen dem Brückenteil 3 un der Rahmentraverse 6 angeordnet sein, und so ein Maß für die auf die Schwinge 1 wirkende Gewichtskraft liefern.

Zur Betätigung der Bettwaage wird jeder Meßfuß mit dem Betätigungshebel 2 auf den Rollen 5 an eine Bettenrolle geschoben, so daß die Schwinge 1 die Bettenrolle aufnimmt. Durch Niederdrücken des Betätigungshebels 2 werden die Rollen 5 auf die Schwinge 1 zu und darunter hindurchgefahren, und die Schwinge 1 mit der Bettenrolle dadurch angehoben. Wenn die Rollen 5 über den Totpunkt, in dem die Rollen 5 vertikal genau unter den Krafteinleitungspunkt oder unter der Aufhängung 9 der Schwinge 1 liegen, hinausbewegt werden, drückt das Gewicht den Meßfuß in die stabile Endposition oder Meßposition auf dem Boden (siehe Figur 4).

## Patentansprüche

1. Bettwaage mit einer Mehrzahl von Meßfüßen, die jeweils ein Bein des Bettes tragen können und mit einem Kraftaufnehmer versehen sind, der ein die auf den Meßfuß einwirkende Gewichtskraft repräsentierendes Signal liefert, und mit einer Auswerteeinrichtung, die mit Übertragungseinrichtungen in den Meßfüßen zur Signalaufnahme in Verbindung steht und dazu vorbereitet ist, aus den Signalen der Meßfüße eine von dem darauf aufliegenden Gesamtgewicht abhängiges Ergebnis zu liefern, **dadurch gekennzeichnet, daß** jeder Meßfuß eine auf Schiebeelementen (5) am Boden verschiebbare Winkelhebelanordnung aufweist, die an einem kürzeren Hebelarm (8) eine seitlich auf ein am Boden stehendes Bein des Bettes zu dessen Aufnahme aufschiebbare Schwinge (1) schwenkbar trägt, wobei die Winkelhebelanordnung und die Aufhängung der Schwinge (1) daran so gestaltet sind, daß bei Niederdrücken des Betätigungshebels (2) die Schwinge (1) angehoben wird und ihre Aufhängung (9) über den Totpunkt, in dem die Aufhängung (9) der Schwinge (1) vertikal über den Schiebeelementen (5) der Winkelhebelanordnung liegt, hinausbewegbar ist.

2. Bettwaage nach Anspruch 1, **dadurch gekennzeichnet, daß** die Schiebeelemente der Winkelhebelanordnung durch Rollen (5) gebildet werden.

3. Bettwaage nach Anspruch 1 oder 2, **dadurch gekennzeichnet, daß** die Schwinge (1) so geformt ist, um seitlich auf eine am Boden stehende Bettenrolle zu deren Aufnahme aufschiebbar zu sein.

4. Bettwaage nach Anspruch 3, **dadurch gekennzeichnet, daß** die Schwinge (1) jedes Meßfußes zwei gegenüberliegende keilförmige Träger aufweist, die auf Abstand zueinander gehalten sind, so daß die Schwinge mit den beiden keilförmigen Trägern unter eine am Boden stehende Bettenrolle geschoben werden kann und dabei die keilförmigen Träger Teile des Umfangs der Bettenrolle von unten umfassen.

5. Bettwaage nach einem der vorhergehenden Ansprüche, **dadurch gekennzeichnet, daß** der Kraftaufnehmer jedes Meßfußes als Wägezelle ausgebildet ist, die die durch das Gewicht auf der Schwinge (1) verursachte Kraft auf den kürzeren Hebelarm (8) aufnimmt.

6. Bettwaage nach einem der Ansprüche 2 bis 5, **dadurch gekennzeichnet, daß** die Rollen (5) der Winkelhebelanordnung einen Abstand zueinander haben und einen Freiraum zwischen sich freilassen, der so groß ist, daß sich die Schwinge (1) zwischen die Rollen (5) der Winkelhebelanordnung schwenken kann.

7. Bettwaage nach Anspruch 6, **dadurch gekennzeichnet, daß** die Winkelhebelanordnung jedes Meßfußes zwei auf Abstand zueinander liegende Rahmenteile (4), die am unteren Ende jeweils eine Rolle (5) tragen, eine die Rahmenteile (4) an ihrem gegenüberliegenden Ende verbindende Rahmentraverse (6), zwei kürzere Hebelarme (8), die mit einem Brückenteil (3) an dessen gegenüberliegenden Enden verbunden sind und an ihren von dem Brückenteil (3) abgewandten Enden die Schwinge (1) in der Aufhängung (9) tragen, und einen von wenigstens einem der Rahmenteile (4) ausgehenden Betätigungshebel (2) aufweist, wobei das Brückenteil (3) über einen Kraftaufnehmer mit der Rahmentraverse (6) verbunden ist.

8. Bettwaage nach einem der vorhergehenden Ansprüche, **dadurch gekennzeichnet, daß** der Betätigungshebel (2) in einer Richtung senkrecht zu seiner Betätigungsebene einklappbar ist.

## Claims

1. Bed scale having a plurality of measuring feet each of which can support one leg of the bed and is provided with a force transducer which delivers a signal representing the weight force acting on the measuring foot, and an evaluation device which is in communication with transmission devices in the measuring feet for receiving up the signals and is prepared to deliver based on the signals of the measuring feet a result dependent on the weight force bearing thereon, **characterized in that** each measuring foot has an angle lever arrangement displaceable on the floor on sliding elements (5), which swivellably bears at a shorter lever arm (8) a rocker (1) which can be pushed laterally onto a leg of the bed standing on the floor to engage it, the angle lever arrangement and the suspension mounting of the rocker (1) being arranged such that, upon pressing-down of the activating lever (2), the rocker (1) is lifted and its suspension mounting (9) can be moved out beyond the dead centre in which the suspension mounting (9) of the rocker (1) lies vertical above the sliding elements (5) of the angle lever arrangement.

2. Bed scale according to claim 1, **characterized in that** the sliding elements of the angle lever arrangement are formed by rollers (5).

3. Bed scale according to claim 1 or 2, **characterized in that** the rocker (1) is shaped such that it can be laterally pushed onto a bed roller standing on the floor to accommodate it.

4. Bed scale according to claim 3, **characterized in that** the rocker (1) of each measuring foot has two opposing wedge-shaped supports which are held at a distance from each other such that the rocker with the two wedge-shaped supports can be pushed under a bed roller standing on the floor and in the process the wedge-shaped supports encompass parts of the circumference of the bed roller from underneath.

5. Bed scale according to one of the previous claims, **characterized in that** the force transducer of each measuring foot is formed by a weighing cell which senses the pressure caused by the weight on the rocker (1) on the shorter lever arm (8).

6. Bed scale according to one of claims 2 to 5, **characterized in that** the rollers (5) of the angle lever arrangement are located at a distance from each other and leave free between each other a space which is so great that the rocker (1) can swivel between the rollers (5) of the angle lever arrangement.

7. Bed scale according to claim 6, **characterized in that** the angle lever arrangement of each measuring foot has two frame parts (4) lying at a distance from each other each of which supports at the lower ends a roller (5), a frame crossbar (6) connecting the frame parts (4) at their opposite end, two shorter lever arms (8), which are connected to a bridge part (3) at its opposite ends and, at their ends facing away from the bridge part (3), bear the rocker (1) in the suspension mounting (9), and an activating lever (2) extending from at least one of the frame parts (4), the bridge part (3) being connected via a force transducer to the frame crossbar (6).

8. Bed scale according to one of the previous claims, **characterized in that** the activating lever (2) is foldable in a direction perpendicular to its activation plane.

## Revendications

1. Balance pour lit comportant une multiplicité de pieds de mesure, qui peuvent porter respectivement un pied du lit, et sont équipés d'un transmetteur de force, qui délivre un signal représentant la force du poids agissant sur le pied de mesure, et comportant un dispositif d'évaluation, qui est relié à des dispositifs dé transmission dans les pieds de mesure pour l'enregistrement de signaux et est préparé de manière à délivrer, à partir des signaux des pieds de mesure, un résultat qui dépend du poids total appliqué sur ces pieds, **caractérisée en ce que** chaque pied de mesure comporte un dispositif à levier coudé déplaçable sur des éléments de translation (5) sur le sol et qui porte, avec possibilité de pivotement sur un bras de levier plus court (8), un bras oscillant (1) pouvant être repoussé latéralement sur un pied du lit, qui est placé sur le sol, pour recevoir ce pied, le dispositif à levier coudé et la suspension du bras oscillant (1) étant agencés de telle sorte que, dans le cas d'un abaissement du levier d'actionnement (2), le bras oscillant (1) est soulevé et sa suspension (9) peut être ressortie au-delà du point mort, au niveau duquel la suspension (9) du bras oscillant (1) est disposé verticalement au-dessus des éléments de translation (5) du dispositif à levier coudé.

2. Balance de lit selon la revendication 1, **caractérisée en ce que** les éléments de translation du dispositif à levier coudé sont formés par des roulettes (5).

3. Balance de lit selon la revendication 1 ou 2, **caractérisée en ce que** le bras oscillant (1) est agencé de manière à pouvoir être repoussé latéralement sur une roulette du lit, qui est disposée sur le sol, pour la réception de cette roulette.

4. Balance de lit selon la revendication 3, **caractérisée en ce que** le bras oscillant (1) de chaque pied de mesure comporte deux supports opposés en forme de coins, qui sont maintenus à distance l'un de l'autre, de sorte que le bras oscillant peut être repoussé avec les deux supports en forme de coins, au-dessous d'une roulette du lit disposée sur le sol et que les supports en forme de coins enserrent à partir du bas des parties de la périphérie de la roulette du lit.

5. Balance de lit selon la revendication précédente, **caractérisée en ce que** le transmetteur de force de chaque pied de mesure est agencé sous la forme d'une cellule de pesée, qui reçoit la force, provoquée par le poids agissant sur le bras oscillant (1), sur le bras de levier le plus court (8).

6. Balance de lit selon l'une des revendications 2 à 5, **caractérisée en ce que** les roulettes (5) du dispositif à levier coudé sont distantes l'une de l'autre et définissent entre elles un espace libre qui est suffisamment important pour que le bras oscillant (1) puisse pivoter entre les roulettes (5) du dispositif à levier coudé.

7. Balance de lit selon la revendication 6, **caractérisée en ce que** le dispositif à levier coudé de chaque pied de mesure porte deux éléments de cadre (4), qui sont situés à distance l'un de l'autre et portent chacun, au niveau de l'extrémité inférieure, une roulette (5), et une traverse de cadre (6), qui relie les parties de cadre (4) au niveau de leurs extrémités situées en vis-à-vis, deux bras de levier plus courts (8), qui sont reliés à une partie formant étrier (3) au niveau des extrémités opposées du côté de cette partie et portent, au niveau de leurs extrémités tournées à l'opposé de la partie formant étrier (3), le bras oscillant (1) dans la suspension (9), et comporte un levier d'actionnement (2), qui s'étend à partir d'au moins l'un des éléments de cadre (4), la partie formant étrier (3) étant reliée par l'intermédiaire d'un transmetteur de force à la traverse de cadre (6).

8. Balance de lit selon l'une des revendications précédentes, **caractérisée en ce que** le levier d'actionnement (2) peut basculer dans une direction perpendiculaire à son plan d'actionnement.
